# FASCICULE DE BREVET EUROPEEN

(11) **EP 2 032 890 B1**
(45) Date de publication et mention de la délivrance du brevet: **15.02.2012**
(21) Numéro de dépôt: 07731894.7
(22) Date de dépôt: 16.04.2007
(51) Int. Cl.: F17C 3/04, F16L 59/065

(54) **SYSTÈME D'ISOLATION D'UN RÉSERVOIR CRYOGÉNIQUE, PROCÉDÉ D'ISOLATION DUDIT RÉSERVOIR**
SYSTEM ZUR ISOLIERUNG EINES KRYOBEHÄLTERS UND VERFAHREN ZUR ISOLIERUNG DES BEHÄLTERS
SYSTEM FOR INSULATING A CRYOGENIC TANK AND METHOD OF INSULATING SAID TANK

(30) Priorité: 14.06.2006 FR 0652128
(43) Date de publication de la demande: 11.03.2009
(73) Titulaire: L'AIR LIQUIDE, Société Anonyme pour l'Etude et l'Exploitation des Procédés Georges Claude, 75007 Paris (FR)
(72) Inventeur: WIERTZ, Thierry, F-38640 Claix (FR)
(74) Mandataire: De Cuenca, Emmanuel Jaime
(86) Numéro de dépôt international: PCT/FR2007/051117
(87) Numéro de publication internationale: WO 2007/144525

(56) Documents cités:
- FR-A1- 2 343 965
- FR-A1- 2 535 831
- US-A- 3 935 957
- US-A- 4 116 150

## Description

La présente invention concerne un système d'isolation d'un réservoir cryogénique, tel que réservoir de lanceurs spatiaux ou tout autre réservoir susceptible de contenir un fluide cryogénique, tel que notamment réservoir de stockage fixe, camion citerne, réservoir de véhicule.

L'utilisation de fluides cryogéniques pour les lanceurs ou véhicules spatiaux est particulièrement intéressante car elle permet de mettre en oeuvre des combustibles et carburants liquides, notamment pour lancer et manoeuvrer ces engins. En outre, ces fluides font l'objet de nombreux développements afin de propulser des véhicules terrestres.

Les fluides susceptibles d'être contenus dans de tels réservoirs sont, par exemple, l'hydrogène, l'oxygène, le gaz naturel, l'éthylène. Ces fluides sont stockés à l'état liquide à très basse température, par exemple l'hydrogène à moins de - 252°C, l'oxygène à moins de - 183°C, le gaz naturel à moins de -162°C, alors que la température ambiante, à l'extérieur du réservoir est en général autour de 20°C.

La quantité de fluides nécessaire, notamment pour la propulsion d'engins spatiaux, impose en général des réservoirs aux formes soigneusement adaptées à l'engin, et ces réservoirs constituent une partie très importante de l'ensemble.

Afin de maintenir le fluide contenu dans le réservoir à l'état liquide, il convient d'isoler les parois du réservoir. On dispose donc des matériaux isolants entre la structure du réservoir, en général la paroi externe du réservoir, et le volume où le fluide cryogénique est stocké.

Un tel réservoir est par exemple décrit dans le document brevet US 3,935,957 où un matériau isolant thermique est disposé entre deux parois.

Un matériau isolant utilisé de manière connue est constitué de mousse cellulaire rigide à forte proportion de cellules fermées, par exemple mousse Polychlorure de vinyle (PVC) ou Polyuréthane (PU), notamment de densités dont l'ordre de grandeur se situe entre 30 Kg/m³ et 80 Kg/m³. On cite à titre d'exemples les produits commerciaux suivants : AIREX® C71.55, Diab Divynicell® HP50, Puren® P 60 T.

On considère usuellement que ces matériaux constituent le meilleur compromis en terme de masse nécessaire pour l'isolation, de performance thermique, de facilité de mise en oeuvre, notamment par collage sur la structure du réservoir.

Il convient également de noter que l'isolation, disposée à l'intérieur ou à l'extérieur du réservoir, doit être étanche afin d'empêcher le cryopompage de gaz dans le volume du matériau isolant. A ce jour de nombreux matériaux ne sont pas mis en oeuvre pour l'isolation thermique de réservoir cryogénique car ils ne sont pas étanches.

On note en outre que les matériaux isolants utilisés doivent présenter une résistance mécanique suffisante pour ne pas se fissurer sous les champs de contrainte induits par la dilatation différentielle entre la structure du réservoir et le matériau isolant, pendant les cycles de remplissage ou de décharge du réservoir. De nombreux matériaux se fissurent ou s'effritent quand ils sont soumis à de tels cycles de température et aux forts gradients thermiques qui en résultent.

Il en résulte qu'aujourd'hui seul un nombre très limité de matériaux isolants est mis en oeuvre pour isoler des réservoirs cryogéniques.

Le document US-4,116,150-A décrit un système d'isolation selon le préambule des revendications 1 et 13.

Le but de la présente invention est de proposer un système d'isolation qui permettrait de mettre en oeuvre une grande variété de matériaux isolants afin d'isoler des réservoirs cryogéniques.

Ce but est atteint grâce à un système d'isolation de réservoir cryogénique comprenant des blocs de matériaux isolants disposés, à basse température, de manière essentiellement jointive sur une face de la structure dudit réservoir où les blocs sont disposés entre ladite face de la structure et une paroi déformable et étanche, qui délimite au moins une partie du volume où le fluide cryogénique est stocké, et est actionnée par des moyens de rappel vers la face de la structure, une première partie des blocs étant, à température ambiante, en contact avec la face de la structure et distants de la paroi déformable et étanche, une seconde partie des blocs étant, à température ambiante, en contact avec la paroi déformable et étanche et distant de la face de la structure, les bords des blocs de la première partie et ceux de la deuxième partie étant à température ambiante, en contact partiel et présentant des formes complémentaires afin de former une couche de matériau isolant essentiellement continue à basse température.

Il est ainsi possible de distinguer la fonction d'étanchéité, qui est avantageusement assurée par la paroi déformable et étanche située du côté où le fluide cryogénique est stocké, de la fonction d'isolation thermique, assurée par le matériau isolant compris entre la structure et cette paroi déformable et étanche. Grâce à cette disposition, il est possible d'utiliser des matériaux isolants qui ne sont pas étanches. A titre d'exemples, on cite le Polyetherimide (PEI) non étanche à l'hélium (notamment Airex® R-82), les polyimides (PI) non totalement étanches (notamment SOLREX® de la société Sordal), les polyméthacrylimides (PMI) sensibles à la reprise d'humidité et non étanches aux gaz (notamment Rohacell® 51 WF de la société Rôhm). Ces matériaux présentent des propriétés mécaniques et/ou une stabilité à haute température avantageuse au regard des produits couramment utilisés. En outre, la disposition choisie des blocs de matériaux isolants est particulièrement avantageuse car elle permet de diminuer très sensiblement les contraintes appliquées lors des cycles thermiques et ainsi de diminuer de manière très importante les risques de fissuration ou d'effritement des blocs de matériaux isolants.

Dans le cadre de l'invention, on entend par « structure » du réservoir une paroi, généralement métallique, en contact de laquelle sont disposés les matériaux isolants à basse température. Cette structure est fréquemment l'enveloppe externe du réservoir.

On entend par « basse température » la situation où le réservoir contient un fluide cryogénique, c'est-à-dire où la face interne réservoir est proche de la température de stockage des fluides cryogéniques, typiquement entre - 150°C et - 250° C. On entend par « contact partiel » un contact entre les bords des blocs d'isolant qui ne s'effectue que sur une partie du bord, c'est-à-dire soit un contact ponctuel, par exemple sur une arrête d'un bloc, soit sur une partie seulement de l'épaisseur d'un bloc. On entend par « forme complémentaire » des formes susceptibles de s'emboîter, de manière à permettre aux bords de deux blocs contigus de se contacter à basse température sur essentiellement toute leur surface.

Selon un mode de réalisation, les moyens de rappel de la paroi déformable et étanche sont constitués par une différence de pression entre l'intérieur du réservoir cryogénique et l'espace où sont disposés les blocs de matériaux isolants, notamment en faisant le vide dans cet espace.

Il est également possible d'envisager des moyens de rappel que pourraient offrir une paroi déformable et étanche sous contrainte, ou bien un actionnement de cette paroi, notamment par des moyens motorisés.

Selon un autre mode de réalisation, les blocs de matériaux isolants sont essentiellement parallélépipédiques, notamment polygonaux.

De manière avantageuse, la première partie des blocs en contact avec la face de la structure est collée à ladite face de la structure.

Selon un mode de réalisation, la paroi déformable et étanche est constituée d'un film polymère, par exemple à base de polyimides (PI), notamment les produits commercialisés par la société DuPont comme le Kapton® ou l'UBE Upilex®. Il est également envisageable d'utiliser une feuille de métal fine afin de constituer cette paroi.

De manière avantageuse, la première partie des blocs de matériaux isolants forme une trame dans laquelle s'insère la seconde partie des blocs de matériaux isolants. On peut alors notamment disposer la première partie des blocs de matériaux isolants sous forme de bandes ou de grilles.

Selon un mode de réalisation de l'invention, des bords de formes complémentaires sont taillés en biseau. Le biseau peut se situer sur tout ou partie du bord taillé. Il est également possible d'envisager des bords de forme arrondie sur tout ou partie du bord.

De manière avantageuse, la première partie des blocs de matériaux isolants a des bords taillés en biseau selon un angle α, la deuxième partie des blocs de matériaux isolants a des bords taillés en biseau suivant un angle β, et où α est supérieur à β. A titre d'exemple, α = 60° et β = de 50° à 55°, suivant les dimensions des blocs et les propriétés de dilatation du matériau. La différence entre les angles α et β est par exemple comprise entre 5° et 10°. Il est ainsi possible de prendre en compte les variations de forme liées à la dilatation des blocs. On diminue ainsi encore les contraintes appliquées aux blocs permettant de limiter davantage les risques de dégradation des blocs.

De manière avantageuse, la deuxième partie des blocs de matériaux isolants a des faces principales cintrées, à température ambiante, présentant une courbure concave en regard de la structure. On appelle « faces principales » les faces d'un bloc de matériau isolant en contact ou parallèles à la structure à basse température. Ce mode de réalisation est notamment avantageux pour des blocs de matériaux isolants épais et permet de diminuer les contraintes à basse température. En effet, lors d'une mise à froid du système, le gradient thermique de ces blocs pourra induire un effet de cintrage inverse au précintrage. De cette façon, le précintrage combiné à la déformation du panneau va encore améliorer l'emboîtement des panneaux.

Selon un autre mode de réalisation, la structure du réservoir comprend un film étanche au contact duquel est disposée la première partie des blocs de matériaux isolants. On peut ainsi utiliser une structure comprenant une paroi non étanche, l'étanchéité de la structure étant assurée par le film étanche.

Selon un mode de réalisation avantageux, le système comprend un port de pompage destiné à faire le vide entre la structure du réservoir cryogénique et la paroi déformable et étanche. Le port de pompage peut être relié occasionnellement ou en continu à un dispositif de pompage. Selon un mode de réalisation, le système d'isolation comprend des brides à ses extrémités qui relient la structure et la paroi déformable étanche. Les brides permettent de fermer le volume qui contient les blocs de matériaux isolants. On peut ainsi assurer la continuité entre plusieurs segments d'un même réservoir cryogénique ou l'aménagement d'interfaces (remplissage, vidange, ...) ou de trous d'homme.

La présente invention concerne également un procédé d'isolation de réservoir cryogénique tel que défini dans la revendication 13.

L'invention sera détaillée ci-après à l'aide d'exemples non limitatifs illustrés par les figures suivantes.
- Figure 1 :: vue partielle en coupe de la disposition des blocs à température ambiante ;
- Figure 2 :: vue partielle en coupe de la disposition des blocs à basse température ;
- Figure 3 :: vue partielle en coupe d'un système d'isolation selon l'invention ;
- Figure 4 :: vue partielle en coupe d'un autre mode de réalisation du système d'isolation selon l'invention ;
- Figure 5 :: vue partielle en coupe d'un réservoir cryogénique comprenant le système d'isolation selon l'invention.

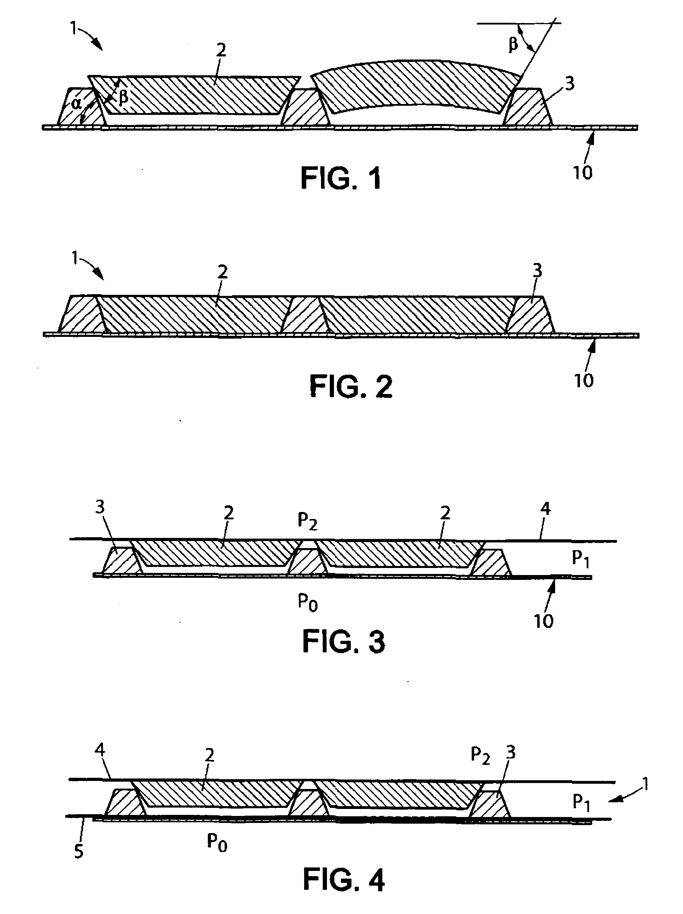

La figure 1 représente une vue partielle de la disposition des blocs de matériaux isolants à température ambiante dans le système d'isolation 1 de réservoir cryogénique selon l'invention. Dans ce mode de réalisation, une première partie 3 des blocs est collée sur une face de la structure 10 du réservoir.

Une seconde partie 2 des blocs est disposée en contact partiel sur la première partie 3 des blocs. Dans ce mode de réalisation les bords des blocs 2, 3 sont taillés en biseau et l'angle α des biseaux des blocs 3 est supérieur à l'angle β des biseaux des blocs 2. Le contact entre les blocs 2, 3 se fait entre l'extrémité des bords des blocs 3 et un point du bord en biseau des blocs 2. Un des blocs 2 est représenté avec deux faces principales parallèles planes selon un mode de réalisation de l'invention. L'autre bloc 2 est représenté avec deux faces principales parallèles cintrées à température ambiante, présentant une courbure concave en regard de la structure 10.

La figure 2 représente le même mode de réalisation que celui de la figure 1 quand le fluide cryogénique est introduit dans le réservoir. Du fait du gradient de température très important entre la face externe de la structure 10 (sensiblement à température ambiante) et la face opposée en contact avec le fluide cryogénique les blocs 2, 3 se déforment par rapport à la figure 1. Les formes des blocs sont dessinées de manière à ce que les blocs forment une couche de matériau isolant essentiellement continue à basse température. Les paramètres permettant de dessiner de tels blocs sont connus de l'homme du métier et prennent en compte notamment la dimension des blocs, le coefficient de dilatation du matériau isolant utilisé.

La figure 3 représente une vue partielle en coupe d'un système d'isolation selon l'invention à température ambiante où est disposé un film 4 sur les blocs 2, 3 représentés en figure 1. L'extérieur du réservoir est à la pression atmosphérique P₀, l'intérieur du réservoir à une pression P₂, en général proche de la pression atmosphérique ; l'espace entre la structure 10 et le film 4 est mis sous vide, à la pression résiduelle P₁.

La figure 4 représente un autre mode de réalisation où en plus des éléments de la figure 3, on ajoute un film étanche 5 contre la paroi externe du réservoir. Le film 5 et ladite paroi forment la structure 11. Les blocs 3 sont disposés au contact de ce film. Il est ainsi possible d'utiliser une paroi extérieure poreuse, ce qui est avantageux en terme de facilité de choix de matériau et de coût.

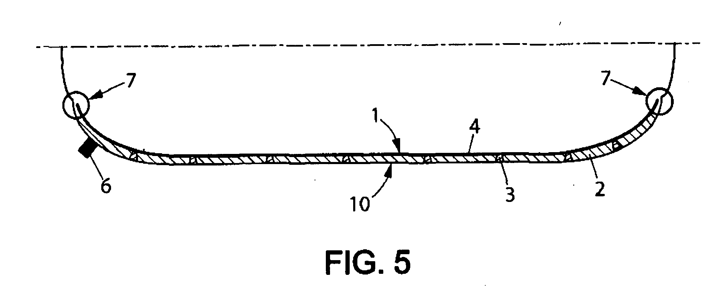

La figure 5 représente une vue partielle en coupe d'un réservoir cryogénique comprenant le système d'isolation 1 selon l'invention, où des blocs 2, 3 de matériaux isolants sont disposés entre une structure 10 et un film 4. Cette représentation montre le réservoir à basse température. Le réservoir est un cylindre dont l'axe est représenté. Les extrémités du réservoir sont des plaques recourbées auxquelles sont fixées des brides 7 avec joint qui assurent l'étanchéité entre la structure 10 et le film 4. Un port de pompage 6 est disposé sur la structure 10 afin de pouvoir faire le vide, total ou partiel, entre la structure 10 et le film 4.

L'invention ne se limite pas à ces types de réalisation et doit être interprétée de façon non limitative, et englobant tout système d'isolation selon la première revendication.

## Revendications

1. Système d'isolation (1) de réservoir cryogénique comprenant des blocs (2, 3) de matériaux isolants disposés, à basse température, de manière essentiellement jointive sur une face de la structure (10) dudit réservoir, les blocs (2, 3) étant disposés entre ladite face de la structure (10) et une paroi (4) déformable et étanche, qui délimite au moins une partie du volume où le fluide cryogénique est stocké, et est actionnée par des moyens de rappel vers la face de la structure (10), **caractérisé en ce qu'**une première partie (3) des blocs est à température ambiante en contact avec la face de la structure (10) et distants de la paroi (4) déformable et étanche, une seconde partie (2) des blocs étant à température ambiante, en contact avec la paroi (4) déformable et étanche et distant de la face de la structure (10), les bords des blocs de la première partie (3) et ceux de la deuxième partie (2) étant, à température ambiante, en contact partiel et présentant des formes complémentaires afin de former une couche de matériau isolant essentiellement continue à basse température.

2. Système d'isolation (1) selon la revendication 1 **caractérisé en ce que** les moyens de rappel de la paroi déformable et étanche sont constitués par une différence de pression entre l'intérieur du réservoir cryogénique et l'espace où sont disposés les blocs de matériaux isolants (2, 3).

3. Système isolant selon la revendication 1 ou 2 **caractérisé en ce que** les blocs (2, 3) de matériaux isolants sont essentiellement parallélépipédiques, notamment polygonaux.

4. Système isolant selon l'une quelconque des revendications précédentes **caractérisé en ce que** la première partie (3) des blocs en contact avec la face de la structure (10) est collée à ladite face de la structure (10).

5. Système isolant selon l'une quelconque des revendications précédentes **caractérisé en ce que** la paroi (4) déformable et étanche est constituée d'un film polymère, par exemple à base de polyimides.

6. Système isolant selon l'une quelconque des revendications précédentes **caractérisé en ce que** la première partie (3) des blocs de matériaux isolants forme une trame dans laquelle s'insère la seconde partie (2) des blocs de matériaux isolants.

7. Système isolant selon l'une quelconque des revendications précédentes **caractérisé en ce que** des bords de formes complémentaires sont taillés en biseau.

8. Système isolant selon la revendication 7 **caractérisé en ce que** la première partie (3) des blocs de matériaux isolants a des bords taillés en biseau selon un angle α, la deuxième partie (2) des blocs de matériaux isolants a des bords taillés en biseau suivant un angle β, et où α est supérieur à β, notamment avec une différence de 5° à 10 °.

9. Système d'isolation selon l'une quelconque des revendications précédentes, **caractérisé en ce que** la deuxième partie (2) des blocs de matériaux isolants a des faces principales cintrées à température ambiante, présentant une courbure concave en regard de la structure (10).

10. Système isolant selon l'une quelconque des revendications précédentes **caractérisé en ce que** la structure (10) du réservoir comprend un film étanche au contact duquel est disposée la première partie (3) des blocs de matériaux isolants.

11. Système isolant selon l'une quelconque des revendications précédentes **caractérisé en ce que** le système comprend un port de pompage (6) destiné à faire le vide entre la structure (10) du réservoir cryogénique et la paroi (4) déformable et étanche.

12. Système isolant selon l'une quelconque des revendications précédentes **caractérisé en ce que** le système d'isolation comprend des brides (7) à ses extrémités qui relient la structure (10) et la paroi (4) déformable et étanche.

13. Procédé d'isolation de réservoir cryogénique comprenant les étapes suivantes :
- disposer la structure (10) du réservoir,
- disposer sur la structure (10), notamment par collage, une première partie (3) de blocs de matériaux isolants.
- disposer, sur la première partie (3) de blocs de matériaux isolants, une deuxième partie (2) de blocs de matériaux isolants en contact partiel avec ladite première partie (3) de blocs, où les bords des blocs de la première partie (3) et ceux de la deuxième partie (2) présentent des formes complémentaires.
- disposer sur la deuxième partie (2) de blocs de matériaux isolants une paroi (4) déformable et étanche,
- actionner des moyens de rappel, notamment en créant un vide, entre la structure (10) du réservoir et la paroi (4) déformable et étanche pour former une couche essentiellement continue de matériaux isolants à basse température, **caractérisé en ce que** qu'une première partie (3) des blocs est à température ambiante en contact avec la face de la structure (10) et distants de la paroi (4) déformable et étanche, une seconde partie (2) des blocs étant à température ambiante, en contact avec la paroi (4) déformable et étanche et distant de la face de la structure (10), les bords des blocs de la première partie (3) et ceux de la deuxième partie (2) étant, à température ambiante, en contact partiel et présentant des formes complémentaires afin de former une couche de matériau isolant essentiellement continue à basse température.

## Claims

1. Insulation system (1) for a cryogenic tank comprising blocks (2, 3) of insulating materials arranged, at a low temperature, in a substantially abutting manner on a face of the structure (10) of said tank, the blocks (2, 3) being arranged between said face of the structure (10) and a deformable impervious wall (4) which limits at least a portion of the volume where the cryogenic fluid is stored and is actuated by return means towards the face of the structure (10), **characterised in that** a first portion (3) of the blocks is, at ambient temperature, in contact with the face of the structure (10) and remote from the deformable impervious wall (4), a second portion (2) of the blocks being, at ambient temperature, in contact with the deformable impervious wall (4) and remote from the face of the structure (10), the edges of the blocks of the first portion (3) and those of the second portion (2) being, at ambient temperature, in partial contact and having complementary shapes so as to form a substantially continuous layer of insulating material at a low temperature.

2. Insulation system (1) according to claim 1, **characterised in that** the return means of the deformable impervious wall are formed by a difference in pressure between the interior of the cryogenic tank and the space where the blocks of insulating materials (2, 3) are arranged.

3. Insulation system according to either claim 1 or claim 2, **characterised in that** the blocks (2, 3) of insulating materials are substantially parallelepiped-shaped, in particular polygonal.

4. Insulation system according to any one of the preceding claims, **characterised in that** the first portion (3) of the blocks in contact with the face of the structure (10) is adhesively bonded to said face of the structure (10).

5. Insulation system according to any one of the preceding claims, **characterised in that** the deformable impervious wall (4) consists of a polymeric film, for example a polyimide-based film.

6. Insulation system according to any one of the preceding claims, **characterised in that** the first portion (3) of the blocks of insulating materials forms a frame in which the second portion (2) of the blocks of insulating materials is inserted.

7. Insulation system according to any one of the preceding claims, **characterised in that** edges of complementary shapes are bevelled.

8. Insulation system according to claim 7, **characterised in that** the first portion (3) of the blocks of insulating materials has edges bevelled according to an angle α, the second portion (2) of the blocks of insulating materials has edges bevelled in accordance with an angle β, and α being greater than β, in particular with a difference of 5° to 10°.

9. Insulation system according to any one of the preceding claims, **characterised in that** the second portion (2) of the blocks of insulating materials has main faces which are curved at ambient temperature, having a concave curvature with respect to the structure (10).

10. Insulation system according to any one of the preceding claims, **characterised in that** the structure (10) of the tank comprises an impervious film, in contact with which the first portion (3) of the blocks of insulating materials is arranged.

11. Insulation system according to any one of the preceding claims, **characterised in that** the system comprises a pumping port (6) for creating the vacuum between the structure (10) of the cryogenic tank and the deformable impervious wall (4).

12. Insulation system according to any one of the preceding claims, **characterised in that** the insulation system comprises flanges (7) at its ends which connect the structure (10) and the deformable impervious wall (4).

13. Method for insulating a cryogenic tank comprising the following steps:
- arranging the structure (10) of the tank,
- arranging on the structure (10), in particular by adhesive bonding, a first portion (3) of blocks of insulating materials,
- arranging, on the first portion (3) of blocks of insulating materials, a second portion (2) of blocks of insulating materials in partial contact with said first portion (3) of blocks, the edges of the blocks of the first portion (3) and those of the second portion (2) having complementary shapes,
- arranging a deformable impervious wall (4) on the second portion (2) of blocks of insulating materials,
- actuating return means, in particular by creating a vacuum, between the structure (10) of the tank and the deformable impervious wall (4) so as to form a substantially continuous layer of insulating materials at a low temperature, **characterised in that** a first portion (3) of the blocks is, at ambient temperature, in contact with the face of the structure (10) and remote from the deformable impervious wall (4), a second portion (2) of the blocks being, at ambient temperature, in contact with the deformable impervious wall (4) and remote from the face of the structure (10), the edges of the blocks of the first portion (3) and those of the second portion (2) being, at ambient temperature, in partial contact and having complementary shapes so as to form a substantially continuous layer of insulating material at a low temperature.

## Patentansprüche

1. Isolationssystem (1) für Kryo-Tank, umfassend Blöcke (2, 3) aus isolierenden Materialien, die bei niedriger Temperatur im Wesentlichen angrenzend auf einer Fläche der Struktur (10) des Tanks angeordnet sind, wobei die Blöcke (2, 3) zwischen der Fläche der Struktur (1) und einer verformbaren, dichten Wand (4) angeordnet sind, die zumindest einen Teil des Volumens, in dem das kryogene Fluid gespeichert ist, begrenzt und durch Rückstellmittel in Richtung der Fläche der Struktur (10) betätigt wird, **dadurch gekennzeichnet, dass** ein erster Teil (3) der Blöcke bei Umgebungstemperatur in Kontakt mit der Fläche der Struktur (10) ist und von der verformbaren dichten Wand (4) beabstandet ist, und ein zweiter Teil (2) der Blöcke bei Umgebungstemperatur in Kontakt mit der verformbaren, dichten Wand (4) ist und von der Fläche der Struktur (10) beabstandet ist, wobei die Ränder der Blöcke des ersten Teils (3) und die des zweiten Teils (2) bei Umgebungstemperatur in teilweisem Kontakt sind und komplementäre Formen aufweisen, so dass sie eine Schicht aus isolierendem Material bilden, die bei niedriger Temperatur im Wesentlichen durchgängig ist.

2. Isolationssystem (1) nach Anspruch 1, **dadurch gekennzeichnet, dass** die Rückstellmittel der verformbaren, dichten Wand von einem Druckunterschied zwischen dem Innern des Kryo-Tanks und dem Raum, in dem die Blöcke aus isolierenden Materialien (2, 3) angeordnet sind, gebildet sind.

3. Isolationssystem nach Anspruch 1 oder 2, **dadurch gekennzeichnet, dass** die Blöcke (2, 3) aus isolierenden Materialien im Wesentlichen parallelepipedförmig, insbesondere polygonal sind.

4. Isolationssystem nach einem der vorhergehenden Ansprüche, **dadurch gekennzeichnet, dass** der erste Teil (3) der Blöcke, der in Kontakt mit der Fläche der Struktur (10) ist, an der Fläche der Struktur (10) verklebt ist.

5. Isolationssystem nach einem der vorhergehenden Ansprüche, **dadurch gekennzeichnet, dass** die verformbare, dichte Wand (4) von einem Polymerfilm, zum Beispiel auf der Basis von Polyimiden, gebildet ist.

6. Isolationssystem nach einem der vorhergehenden Ansprüche, **dadurch gekennzeichnet, dass** der erste Teil (3) der Blöcke aus isolierenden Materialien ein Raster bildet, in das sich der zweite Teil (2) der Blöcke aus isolierenden Materialien einfügt.

7. Isolationssystem nach einem der vorhergehenden Ansprüche, **dadurch gekennzeichnet, dass** die Ränder mit komplementären Formen schräg abgeschnitten sind.

8. Isolationssystem nach Anspruch 7, **dadurch gekennzeichnet, dass** der erste Teil (3) der Blöcke aus isolierenden Materialien Ränder hat, die gemäß einem Winkel α schräg abgeschnitten sind, der zweite Teil (2) der Blöcke aus isolierenden Materialien Ränder hat, die gemäß einem Winkel β schräg abgeschnitten sind, und wobei α größer als β ist, insbesondere mit einem Unterschied von 5° bis 10°.

9. Isolationssystem nach einem der vorhergehenden Ansprüche, **dadurch gekennzeichnet, dass** der zweite Teil (2) der Blöcke aus isolierenden Materialien Hauptflächen hat, die bei Umgebungstemperatur gewölbt sind, wobei sie eine konkave Krümmung aufweisen, die der Struktur (10) gegenüberliegt.

10. Isolationssystem nach einem der vorhergehenden Ansprüche, **dadurch gekennzeichnet, dass** die Struktur (10) des Tanks einen dichten Film enthält, in dessen Kontakt der erste Teil (3) der Blöcke aus isolierenden Materialien angeordnet ist.

11. Isolationssystem nach einem der vorhergehenden Ansprüche, **dadurch gekennzeichnet, dass** das System eine Pumpöffnung (6) umfasst, die für die Erzeugung eines Vakuums zwischen der Struktur (10) des Kryo-Tanks und der verformbaren, dichten Wand (4) vorgesehen ist.

12. Isolationssystem nach einem der vorhergehenden Ansprüche, **dadurch gekennzeichnet, dass** das Isolationssystem an seinen Enden Flansche (7) umfasst, welche die Struktur (10) und die verformbare, dichte Wand (4) verbinden.

13. Verfahren zur Isolierung von Kryo-Tanks, umfassend die folgenden Schritte:
- Anordnen der Struktur (10) des Tanks,
- Anordnen eines ersten Teils (3) von Blöcken aus isolierenden Materialien an der Struktur (10), insbesondere durch Kleben,
- Anordnen eines zweiten Teils (2) von Blöcken aus isolierenden Materialien, der in teilweisem Kontakt mit dem ersten Teil (3) von Blöcken ist, an dem ersten Teil (3) von Blöcken aus isolierenden Materialien, wobei die Ränder der Blöcke des ersten Teils (3) und die des zweiten Teils (2) komplementäre Formen aufweisen,
- Anordnen einer verformbaren, dichten Wand (4) an dem zweiten Teil (2) von Blöcken aus isolierenden Materialien,
- Betätigen der Rückstellmittel, insbesondere indem ein Vakuum erzeugt wird, zwischen der Struktur (10) des Tanks und der verformbaren, dichten Wand (4), um bei niedriger Temperatur eine im Wesentlichen durchgängige Schicht aus isolierenden Materialien zu bilden, **dadurch gekennzeichnet, dass** ein erster Teil (3) der Blöcke bei Umgebungstemperatur in Kontakt mit der Fläche der Struktur (10) ist und von der verformbaren dichten Wand (4) beabstandet ist, und ein zweiter Teil (2) der Blöcke bei Umgebungstemperatur in Kontakt mit der verformbaren dichten Wand (4) ist und von der Fläche der Struktur (10) beabstandet ist, wobei die Ränder der Blöcke des ersten Teils (3) und die des zweiten Teils (2), bei Umgebungstemperatur, in teilweisem Kontakt sind und komplementäre Formen aufweisen, so dass sie eine Schicht aus isolierendem Material bilden, die bei niedriger Temperatur im Wesentlichen durchgängig ist.
